# EUROPÄISCHE PATENTSCHRIFT

(11) **EP 0 801 233 B1**
(45) Veröffentlichungstag und Bekanntmachung des Hinweises auf die Patenterteilung: **19.05.1999**
(21) Anmeldenummer: 96104075.5
(22) Anmeldetag: 14.03.1996
(51) Int. Cl.: F16B 5/02

(54) **Distanzschraube**
Distance adjusting screw
Vis de réglage

(43) Veröffentlichungstag der Anmeldung: 15.10.1997
(73) Patentinhaber: Ludwig Hettich & Co., 78713 Schramberg-Sulgen (DE)
(72) Erfinder: Ludwig Hettich & Co., 78713 Schramberg-Sulgen (DE)
(74) Vertreter: Liesegang, Roland, Dr.-Ing.

(56) Entgegenhaltungen:
- EP-A- 0 159 016
- EP-A- 0 267 153
- EP-A- 0 292 742
- EP-A- 0 623 759
- DE-A- 3 540 413

## Beschreibung

Die Erfindung betrifft eine Distanzschraube zum Befestigen von Bauteilen, wie Latten, Fensterrahmen oder dergleichen, im Abstand an einem Untergrund mit den Merkmalen des Oberbegriffs des Anspruchs 1.

Bei bekannten Distanzschrauben dieser Art (EP 0 159 016 B1) dringen die als kegelstumpfförmige Ringe ausgebildeten Umfangsrippen beim Eindrehen der Distanzschraube in das zu befestigende Bauteil ein, um die Funktionskräfte zu übertragen.

Beim Eindrehen der Schraube müssen die im Bauteil auftretenden Eindringkräfte durch zwischen Untergrund und Bauteil angeordnete Distanzelemente abgestützt werden. Diese Distanzelemente können nicht oder nur schwierig nach der Montage des Bauteiles am Untergrund wieder entfernt werden. Nach dem Eindrehen der Distanzschraube in den Untergrund kann der Abstand zwischen Bauteil und Untergrund durch Einschrauben oder Ausschrauben verändert werden.

Es sind auch Distanzschrauben bekannt (EP 0 292 742 B1, EP 0 314 950 B1), die ein Gewinde zur Verankerung im Untergrund, einen gewindelosen Schaftbereich und ein Gewinde im Kopfbereich zum Einschrauben in das zu befestigende Bauteil haben. Bei diesen bekannten Distanzschrauben ist der Abstand zwischen Bauteil und Untergrund nach dem Eindrehen nicht mehr veränderbar.

Schließlich sind Distanzschrauben bekannt (DE 43 21 153 A1), die ein Gewinde zum Verankern in Untergrund, einen gewindelosen Schaft, einen Kopf mit Antriebsausnehmung für einen Schraubendreher und eine auf der Distanzschraube unverlierbar angeordnete Gewindehülse zum Einschrauben in den Untergrund aufweist. Bei dieser Bauweise kann zwar der Abstand zwischen dem Bauteil und dem Untergrund nach dem Eindrehen verändert werden. Jedoch ist der Aufwand aufgrund der Zweiteiligkeit der Konstruktion und der Notwendigkeit eines besonderen Einschraubwerkzeuges zum gemeinsamen Eindrehen von Schraube und Hülse groß.

Der Erfindung liegt die Aufgabe zugrunde, eine einteilige Distanzschraube der aus der EP 0 159 016 B1 beschriebenen Art zu schaffen, die ein Einschrauben ohne Distanzelemente, gleichwohl aber ein Einstellen eines gewünschten Abstandes zwischen Bauteil und Untergrund nach dem Einschrauben ermöglicht.

Zur Lösung dieser Aufgabe ist erfindungsgemäß Anspruch 1 vorgesehen.

Vorteilhafte Ausgestaltungen der Distanzschraube nach der Erfindung ergeben sich aus den Unteransprüchen.

Der erfindungsgemäß zwischen den Umfangsrippen und dem gewindelosen Schaftbereich vorgesehene Gewindeabschnitt erzeugt die zum Einziehen der Rippen in das zu befestigende Bauteil notwendigen Kräfte, so daß das Bauteil nach außen kräftefrei bleibt und keine Abstützung zwischen Bauteil und Untergrund beim Eindrehen der Distanzschraube in den Untergrund mehr erforderlich ist.

Wenn der Gewindeabschnitt soweit aus dem Bauteil ausgetreten ist, daß ein Kräftegleichgewicht zwischen der Durchziehkraft des Gewindeabschnittes und dem Einzugswiderstand der Umfangsrippen herrscht, ist das Einziehen der Distanzschraube in das Bauteil beendet. In diesem Einbauzustand kann der Abstand des Bauteils zum Untergrund durch Weitereinschrauben oder durch Ausschrauben erhöht werden, weil aufgrund des beschriebenen Kräftegleichgewichtes keine Relativbewegung mehr zwischen der Distanzschraube und dem Bauteil auftritt.

Wird während der Ausschraubdrehung der Distanzschraube aus dem Untergrund ein Axialdruck in entgegengesetzter Richtung auf das Bauteil ausgeübt, so dringt der Gewindeabschnitt wieder in das Bauteil ein. Dadurch werden die Umfangsrippen aus dem Bauteil ausgetrieben, so daß sich die Verbindung lösen läßt, ohne daß das Bauteil oder die Distanzschraube beschädigt werden.

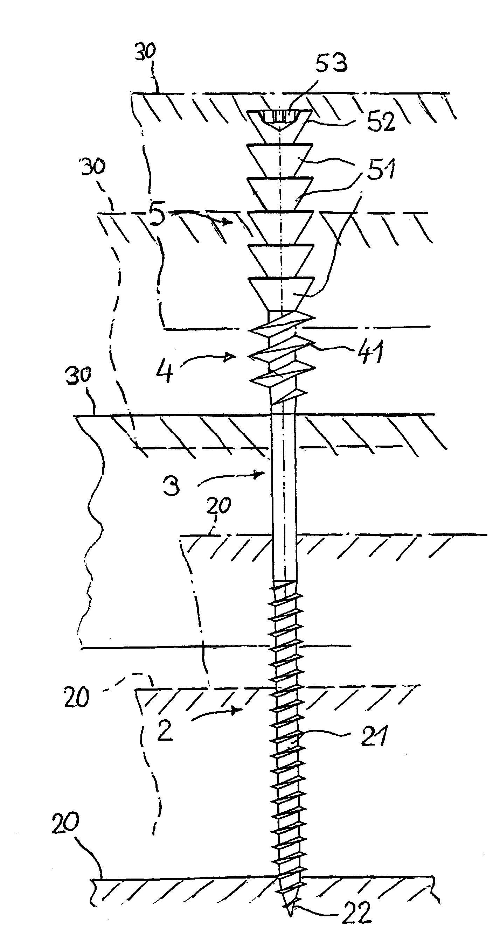

Die Erfindung ist im folgenden anhand einer schematischen Zeichnung mit weiteren Einzelheiten näher erläutert. Die einzige Figur zeigt eine Ansicht einer Distanzschraube nach der Erfindung. Die Distanzschraube hat einen Spitzenbereich 2 mit einem Gewinde 21 kleinen Durchmessers zum Einschrauben der Distanzschraube in den mit 20 bezeichneten Untergrund. Das Gewinde 21 kann zum direkten Einschrauben in Mauerwerk oder Beton gestaltet sein, wie dies in der EP 0 623 759 B1 beschrieben ist.

Unmittelbar an das Gewinde 21 schließt ein Schaftbereich 3 an, auf den ein Gewindeabschnitt 4 mit einem Gewinde 41 größeren Durchmessers und gleicher Steigung wie das Gewinde 21 folgt.

Anschließend an den Gewindeabschnitt 4 folgt ein Kopfbereich 5 mit mehreren Umfangsrippen 51, 52 in Form von kegelstumpfförmigen, geschlossenen Ringen. Die letzte Umfangsrippe 52 hat eine Mitnehmerausnehmung 53 zum Einstecken eines entsprechend geformten Werkzeuges zum Verdrehen der Distanzschraube.

Zum Veranschaulichen der Montage sind der Untergrund 20 und das damit zu verbindende Bauteil 30 in der Zeichnung in drei Phasen, nämlich durchgezogen beim Start des Eindrehens der Distanzschraube in den Untergrund, gestrichelt in einer Zwischenstufe des Eindrehens und strichpunktiert im Endzustand der Montage dargestellt, bei der das Gewinde 41 des Gewindeabschnittes 4 größtenteils aus dem Bauteil 30 ausgetreten ist und ein Kräftegleichgewicht zwischen der Durchziehkraft des Gewindes 41 und dem Einzugswiderstand der Umfangsrippen 51, 52 im Bauteil 30 herrscht. Dies ist ein Zustand, bei dem weiteres Einschrauben der Distanzschraube über das Gewinde 21 in den Untergrund oder ein Ausschrauben des Gewindes 21 aus dem Untergrund nicht mehr zu einer Relativbewegung der Distanzschraube zum Bauteil führt, so daß sich beim weiteren Einschrauben der Abstand zwischen dem Bauteil 30 und dem Untergrund 20 verringert und beim weiteren Ausschrauben dieser Abstand sich erhöht.

Wird nun auf das Bauteil 30 ein Axialdruck in Richtung des Pfeiles ausgeübt, so dringt das Gewinde 41 des Gewindeabschnittes wieder in das Bauteil 30 tiefer ein. Dadurch werden die Rippen 51, 52 wieder aus dem Bauteil ausgetrieben, und die Distanzschraube läßt sich aus der Verbindung lösen, ohne daß das Bauteil oder die Distanzschraube beschädigt werden.

## Patentansprüche

1. Distanzschraube zum Befestigen von Bauteilen, wie Latten, Fensterrahmen oder dgl., im Abstand an einem Untergrund, mit einem Gewinde (21) im Spitzenbereich (2) zum Einschrauben der Distanzschraube in den Untergrund, einem Kopfbereich (5) mit mindestens zwei geschlossene Umfangsrippen (51, 52) und einem gewindelosen Schaftbereich (3), dadurch **gekennzeichnet,** daß zwischen den Umfangsrippen (51, 52) und dem gewindelosen Schaftbereich (3) ein Gewindeabschnitt (4) vorgesehen ist.

2. Distanzschraube nach Anspruch 1, dadurch **gekennzeichnet,** daß der Gewindeabschnitt (4) unmittelbar an die als kegelstumpfförmige Ringe ausgebildeten Umfangsrippen (51, 52) anschließt.

3. Distanzschraube nach Anspruch 1 oder 2, dadurch **gekennzeichnet,** daß das Gewinde (41) des Gewindeabschnitts (4) größeren Durchmesser als das Gewinde (21) im Spitzenbereich (2) hat.

4. Distanzschraube nach einem der Ansprüche 1 bis 3, dadurch **gekennzeichnet**, daß das Gewinde (41) des Gewindeabschnitts (4) die gleiche Steigung aufweist wie das Gewinde (21) im Spitzenbereich (2).

5. Distanzschraube nach einem der Ansprüche 1 bis 4, dadurch **gekennzeichnet**, daß das Gewinde (21) im Spitzenbereich (2) als Mauerschraubengewinde ausgeführt ist.

6. Distanzschraube nach einem der Ansprüche 1 bis 3, dadurch **gekennzeichnet**, daß der Kopfbereich (5) antreibbar gestaltet ist.

7. Distanzschraube nach Anspruch 6, dadurch **gekennzeichnet**, daß in der ersten Umfangsrippe (52) eine Mitnehmerausnehmung (53) vorgesehen ist, in die ein Werkzeug zum Verdrehen der Distanzschraube einsteckbar ist.

## Claims

1. A spacer screw for fixing components, such as slats, window frames or the like, with spacing to a base, comprising a screwthread (21) in the point area (2) for screwing the spacer screw into the base, a head zone (5) having at least two closed peripheral ribs (51, 52) and a non-threaded shank area (3), characterised in that a screwthreaded portion (4) is provided between the peripheral ribs (51, 52) and the non-threaded shank area (3).

2. A spacer screw according to claim 1, characterised in that the screwthreaded portion (4) immediately follows the peripheral ribs (51, 52), which are constructed in the form of frusto-conical rings.

3. A spacer screw according to claim 1 or 2, characterised in that the screwthread (41) of the screwthreaded portion (4) has a larger diameter than the screwthread (21) in the point area (2).

4. A spacer screw according to any one of claims 1 to 3, characterised in that the screwthread (41) of the screwthreaded portion (4) has the same pitch as the screwthread (21) in the point area (2).

5. A spacer screw according to any one of claims 1 to 4, characterised in that the screwthread (21) is constructed as a masonry screwthread in the point area (2).

6. A spacer screw according to any one of claims 1 to 3, characterised in that the head area (5) is adapted to be driven.

7. A spacer screw according to claim 6, characterised in that a driver recess (53) is provided in the first peripheral rib (52) to receive a tool for turning the spacer screw.

## Revendications

1. Vis d'ancrage à distance pour la fixation de pièces, telles que des lattes ou tasseaux, des châssis de fenêtres ou similaires, à distance sur une base de support, comprenant un filetage (21) dans la zone de pointe (2) destiné à visser la vis d'ancrage à distance dans la base de support, une zone de tête (5) avec au moins deux nervures périphériques fermées (51, 52), et une zone de tige (3) sans filetage, **caractérisée** en ce qu'entre les nervures périphériques (51, 52) et la zone de tige (3) sans filetage, est prévu un tronçon fileté (4).

2. Vis d'ancrage à distance selon la revendication 1, **caractérisée** en ce que le' tronçon fileté (4) se raccorde directement aux nervures périphériques (51, 52) réalisées en tant qu'anneaux de forme tronconique.

3. Vis d'ancrage à distance selon la revendication 1 ou 2, **caractérisée** en ce que le filetage (41) du tronçon fileté (4) présente un diamètre supérieur à celui du filetage (21) dans la zone de pointe (2).

4. Vis d'ancrage à distance selon l'une des revendications 1 à 3, **caractérisée** en ce que le filetage (41) du tronçon fileté (4) présente le même pas que le filetage (21) dans la zone de pointe(2).

5. Vis d'ancrage à distance selon l'une des revendications 1 à 4, **caractérisée** en ce que le filetage (21) dans la zone de pointe (2) est réalisé en tant que filetage d'ancrage pour maçonnerie.

6. Vis d'ancrage à distance selon l'une des revendications 1 à 3, **caractérisée** en ce que la zone de tête (5) présente une configuration permettant un entraînement.

7. Vis d'ancrage à distance selon la revendication 6, **caractérisée** en ce que dans la première nervure périphérique (52) est prévu un évidemment d'entraînement (53) dans lequel peut être engagé un outil permettant de faire tourner la vis d'ancrage à distance.
